# EUROPÄISCHE PATENTANMELDUNG

(11) **EP 1 808 630 A1**
(43) Veröffentlichungstag der Anmeldung: **18.07.2007**
(21) Anmeldenummer: 06026988.3
(22) Anmeldetag: 28.12.2006
(51) Int. Cl.: F16L 3/11

(54) **Rohrschelle mit integriertem Käfig für Gewindeelement**

(30) Priorität: 13.01.2006 DE 102006002031
(71) Anmelder: Sinn, Edgar Emil, 56587 Strassenhaus (DE)
(72) Erfinder: Sinn, Edgar Emil, 56587 Strassenhaus (DE)
(74) Vertreter: Braun-Dullaeus, Karl-Ulrich

(57) **Zusammenfassung**

Die Erfindung betrifft eine Rohrschelle (1) mit einem einteilig oder zweiteilig ausgeführten Schellenkörper (2), der einen zumindest im wesentlichen radial nach außen vorspringenden Käfig (5) aufweist, in dem ein Gewindeelement (4) mit einem Innengewinde (8) formschlüssig aufgenommen ist, wobei der nach außen weisende Boden (6) des Käfigs (5) eine Öffnung (7) zum Durchführen eines in das Gewindeelement (4) einschraubbaren Gewindebolzens (9) aufweist, wobei der Käfig (5) an seiner dem Boden (6) gegenüberliegenden Oberseite mindestens einen sich auf der nach innen weisenden Oberfläche (14) des Gewindeelements (4) erstreckenden Haltesteg (10) aufweist, durch den das Gewindeelement (4) in radialer Richtung in dem Käfig (5) gehalten ist, und wobei der Haltesteg (10) derart ausgebildet ist, dass sein freies Ende (12) in das Außengewinde (13) eines in das Gewindeelement (4) einschraubbaren Gewindebolzens (9) eingreifen kann.

## Beschreibung

Die Erfindung betrifft eine Rohrschelle nach dem Oberbegriff von Anspruch 1. Derartige Rohrschellen haben einen einteilig oder zweiteilig ausgeführten Schellenkörper, der einen zumindest im wesentlichen radial nach außen vorspringenden Käfig aufweist, in dem ein Gewindeelement mit einem Innengewinde formschlüssig aufgenommen ist. Ferner ist dabei der nach außen weisende Boden des Käfigs mit einer Öffnung versehen, durch die ein Gewindebolzen zum Einschrauben in das Gewindeelement hindurch geführt werden kann. Bei dem Gewindeelement kann es sich beispielsweise um eine Sechskantmutter mit einem metrischen Gewinde handeln, während der Gewindebolzen auch durch eine Gewindestange oder durch eine Schraube, vorzugsweise mit metrischem Gewinde gebildet sein kann.

Rohrschellen sind allgemein bekannt. Sie werden üblicherweise eingesetzt um runde Körper, insbesondere Rohre, Leitungen, Stangen oder ähnliche Körper mit ihrem Schellenkörper zu umschließen und an technischen Objekten, insbesondere an Gebäudeteilen zu befestigen. Dazu ist an der Rohrschelle zur Aufnahme eines Gewindebolzens oder einer Gewindestange meist eine Befestigungsmutter angebracht, um die Rohrschelle so an einer Wand oder Decke befestigen zu können. Insbesondere können Rohrschellen auch mittels Stockschraube und Dübel, mittels Ansatzschraube mit Dübel oder mittels einer Schlagdübelschraube an dem technischen Objekt befestigt werden.

Üblicherweise werden die Befestigungsmuttern mit dem Schellenkörper der Rohrschelle verschweißt (Kreuzschweißung) oder vernietet, was jeweils einen sehr großen technischen Aufwand und somit mit hohen Kosten in der Herstellung verbunden ist. Außerdem besteht beim Verschweißen oder Vernieten der Anschlussmutter die Gefahr, dass die Verbindung nicht mit der erforderlichen Maßgenauigkeit und/oder nicht mit der notwendigen Festigkeit hinsichtlich Torsions- und Zugbelastungen ausgeführt ist.

Ferner ist es auch bekannt, aus dem Kernmaterial des Schellenkörpers einen Gewindetopf zu ziehen. Eine derartige Rohrschelle mit einer einstückig angeformten Anschlussbüchse mit Innengewinde ist beispielsweise in der DE 35 01 907 A1 offenbart. Aber auch dieses Verfahren bedingt einen hohen Aufwand an Zeit und Energie, was wiederum zu hohen Herstellungskosten führt.

Aus der CH 644 680 A5 ist eine Rohrschelle bekannt, bei der neben einer unlösbaren Befestigung einer Sechskantmutter durch Löten oder Kleben auch die Ausbildung eines radial nach außen ragenden Sockels zur Aufnahme einer Anschlussmutter vorgeschlagen wird.

Ferner ist aus der FR 2 591 708 A1 eine Rohrschelle mit einer radial nach außen vorstehenden Halterung bekannt, in der eine Mutter aufgenommen ist, in die zur Befestigung der Rohrschelle ein Gewindebolzen einschraubbar ist. Die Mutter ist dabei auf einer in ihrer Ebene frei verschiebbaren Platte befestigt, welche durch zwei von den Seitenkanten der Halterung axial nach innen vorstehenden und die Randbereiche der Platte übergreifenden Haltestegen beweglich in der Halterung gehalten wird. Da die Haltestege weder an der Mutter noch an einem darin eingeschraubten Gewindebolzen anliegen, erlaubt diese schwimmende Lagerung der Mutter eine einfache Ausrichtung der Rohrschelle bei ihrer Befestigung an einem Untergrund. Abgesehen davon, dass mit der Platte ein zusätzliches Teil benötigt wird, ist aber auch hier die Befestigung der Mutter an der Platte mit den Nachteilen eines relativ großen technischen Aufwands und entsprechend hoher Kosten bei der Herstellung verbunden.

Eine Rohrschelle der eingangs genannten Art ist aus der DE 30 38 514 A1 bekannt. Dabei ist eine Befestigungsmutter unverdrehbar in einer einen Käfig bildenden Ausbuchtung der Rohrschelle versenkt. Die Befestigungsmutter ist in dem radial nach außen ragenden Käfig formschlüssig gegen Verdrehung gesichert. Damit die Mutter nicht vor dem Einlegen eines Rohres in den Schellenkörper oder vor dem Einschrauben der Aufhängeschraube aus dem Käfig herausfallen kann ist jedoch eine beidseitig am Schellenband befestigte Brücke vorgesehen, die beim Einspannen eines Rohres in die Rohrschelle zwischen dem Rohr und dem Schellenkörper eingespannt wird, was zu einer höheren Druckbelastung auf die Außenseite des Rohres und somit insbesondere bei weniger stabilen Rohren zu einer Beschädigung führen kann. Außerdem wird diese Brücke an beiden Endbereichen durch Schweißverbindungen am Schellenkörper befestigt, was wiederum mit den zuvor genannten Nachteilen, vor allem mit einem erhöhten Aufwand und erhöhten Herstellungskosten verbunden ist.

Aufgabe der vorliegenden Erfindung ist es daher, eine verbesserte Rohrschelle der eingangs genannten Art zu schaffen, die die genannten Nachteile vermeidet und bei einfacher Konstruktion besonders preiswert herzustellen ist. Gleichzeitig soll sie eine hohe Maßgenauigkeit und eine hohe Festigkeit aufweisen und dennoch leicht handhabbar sein.

Diese Aufgabe wird erfindungsgemäß durch eine Rohrschelle nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass der Käfig an seiner dem Boden gegenüberliegenden Oberseite mindestens einen sich auf der nach innen weisenden Oberfläche des Gewindeelements erstreckenden Haltesteg aufweist, durch den das Gewindeelement in radialer Richtung in dem Käfig gehalten ist, wobei der mindestens eine Haltesteg derart ausgebildet ist, dass sein freies Ende in das Außengewinde eines in das Gewindeelement einschraubbaren Gewindebolzens eingreifen kann.

Auf diese konstruktiv besonders einfache Weise wird eine Rohrschelle erhalten, deren fertigungstechnische Vorteile sich vor allem in einer besonders preisgünstigen Produzierbarkeit darstellen. Ein weiterer wesentlicher Vorteil liegt darin, dass durch das Zusammenwirken des freien Endes des mindestens einen Haltesteges mit dem Außengewinde eines eingeschraubten Gewindebolzens ein Teilbereich eines zusätzlichen Gewindegangs geschaffen wird, was gegenüber den vorbekannten Ausführungsformen mit formschlüssig fixierten Befestigungsmuttern zu einer weiteren Steigerung der Festigkeit sowohl gegenüber Zugkräften als auch gegenüber Torsionsbelastungen führt.

Gleichzeitig kann hierbei aufgrund des Verzichts auf Schweiß- oder Nietverbindungen eine besonders hohe Maßgenauigkeit bei der Positionierung des Gewindeelements erzielt werden. Insbesondere besteht durch die erfindungsgemäße Ausführungsform gegenüber der aus der DE 30 38 514 A1 vorbekannten Ausführungsform auch der Vorteil, dass das Gewindeelement durch den mindestens einen Haltesteg in dem Käfig gehalten wird, so dass keine Brücke als separates Halteelement angeschweißt werden muss, so dass insgesamt keine Schweißarbeiten erforderlich sind.

Ein weiterer Vorteil der erfindungsgemäßen Ausführungsform liegt darin, dass durch den Eingriff des freien Endes des mindestens einen Haltesteges in das Außengewinde eines eingeschraubten Gewindebolzens aufgrund der zusätzlichen Widerstandskräfte beim Eindrehen des Gewindebolzens eine gewisse Bremswirkung erzielt wird, die dem Benutzer auch ohne genaue Beobachtung des Einschraubvorgangs signalisiert, dass der Gewindebolzen nunmehr vollständig in das Gewindeelement eingeschraubt ist und somit eine mögliche Endposition bereits erreicht hat oder in Kürze erreichen wird.

Besonders vorteilhaft ist es, wenn das freie Ende des mindestens einen Haltesteges radial so weit von der Längsachse des Innengewindes des Gewindeelements entfernt ist, dass es im Bereich der Gewindeflanken des Innengewindes liegt. Dadurch dass sich das freie Ende des Haltesteges so auf Höhe der Gewindeflanken des Innengewindes befindet, können die vorgenannten Vorteile einer erhöhten Festigkeit und der Bremsfunktion beim Eindrehen des Gewindebolzens besonders effektiv genutzt werden.

Eine weitere Steigerung dieser vorteilhaften Wirkungen kann dadurch erzielt werden, dass zumindest ein Teilbereich des freien Endes des mindestens einen Haltesteges bezüglich der Achse des Innengewindes des Gewindeelements auf einem Radius liegt, der zwischen dem Außendurchmesser und dem Kerndurchmesser des Innengewindes liegt.

Gemäß einer besonders bevorzugten Ausführungsform der Erfindung ist vorgesehen, dass das Gewindeelement kraftschlüssig zwischen dem mindestens einen Haltesteg und dem Boden des Käfigs eingespannt ist. Auf diese Weise ist das Gewindeelement bereits vor der endgültigen Montage eines Rohres nicht nur formschlüssig sondern auch kraftschlüsssig in der Rohrschelle gehalten und gesichert. Eine zusätzliche Sicherheit wird beim Einschrauben eines Gewindebolzens noch dadurch erreicht, dass der Haltesteg aufgrund seines Eingriffs in das Außengewinde des eingeschraubten Gewindebolzens zusätzlich gegen das Gewindeelement gedrückt wird, so dass die zwischen dem Gewindeelement und dem Boden des Käfig einerseits sowie zwischen dem Gewindeelement und dem Haltesteg andererseits wirkenden Einspannkräfte weiter erhöht werden.

Eine fertigungstechnisch besonders einfache Ausführungsform kann dadurch erreicht werden, dass der Käfig einstückig aus dem Schellenkörper heraus geformt ist.

Besonders vorteilhaft ist es ferner, wenn der mindestens eine Haltesteg einstückig aus dem Schellenkörper heraus geformt ist. Auch hierdurch ergibt sich eine fertigungstechnisch besonders einfache und somit kostengünstige Ausführungsform.

Gemäß einer weiteren besonders bevorzugten Ausführungsform ist vorgesehen, dass zwei Haltestege ausgebildet sind, die sich bezüglich der Längsachse des Innengewindes des Gewindeelements diametral gegenüber liegen. Hierdurch werden die vorteilhaften Wirkungen einer erhöhten Festigkeit der montierten Rohrschelle, einer erhöhten Sicherheit des kraftschlüssig eingespannten Gewindeelements sowie der Bremswirkung beim Eindrehen eines Gewindebolzens noch weiter erhöht. In alternativen Ausführungsformen können jedoch auch drei oder mehr, insbesondere vier Haltestege ausgebildet sein.

Besonders vorteilhaft ist es ferner, wenn das Gewindeelement durch eine - entlang der Achse des Innengewindes betrachtet - rechteckige Gewindeplatte gebildet ist, die formschlüssig in einem rechteckigen Käfig aufgenommen ist. Hierdurch ergibt sich nicht nur eine besonders einfache Konstruktion, sondern es wird auch ein besonders sicherer drehfester Halt des Gewindeelements an der Rohrschelle erreicht. Gemäß alternativen Ausführungsformen können jedoch auch beliebige andere Gewindeelemente, beispielsweise eine Sechskantmutter eingesetzt werden.

Besonders günstig ist es außerdem, wenn der Schellenkörper zumindest an einer dem Käfig diametral gegenüber liegenden Stelle eine Öffnung aufweist, durch die hindurch ein Werkzeug zum Einbringen des Gewindebolzens geführt werden kann. Auch können hierdurch vormontierte Schlagdübelschrauben als Schnellmontageset zum Einschlagen der Rohrschelle in ein technisches Objekt verwendet werden. Vorzugsweise wird vorgeschlagen, die Öffnung als ein sich in Umfangsrichtung des Schellenkörpers erstreckendes Langloch auszuführen, wodurch eine besonders einfache Zugänglichkeit des Befestigungselements zur Montage der Rohrschelle an einem technischen Objekt gewährleistet ist.

Darüber hinaus können in dem Schellenkörper der Rohschelle auch weitere Öffnungen vorgesehen werden, die zur Aufnahme von Pufferelementen, beispielsweise aus Gummi oder aus einem gummiähnlichen Werkstoff, oder zur Aufnahme einer die Innenseite des Schellenkörpers abdeckenden elastischen Einlage dienen können.

Weitere Vorteile und Merkmale der Erfindung ergeben sich aus der nachfolgenden Beschreibung und den in den Zeichnungen dargestellten Ausführungsbeispielen.

Es zeigen
- Figur 1:: dreidimensionale Ansicht einer erfindungsgemäßen Rohrschelle mit eingesetztem Gewindeelement und separatem Gewindebolzen;
- Figur 2:: dreidimensionale Ansicht einer alternativen Ausführungsform einer erfindungsgemäßen Rohrschelle ohne eingesetztes Gewindeelement; und
- Figur 3:: Querschnitt durch die Rohrschelle aus Figur 2 mit separatem Gewindebolzen.

Die in den Figuren dargestellte Rohrschelle 1 hat einen einstückig ausgeführten Schellenkörper 2, dessen beide Enden jeweils ein etwa radial nach außen gerichtetes Ohr 3 aufweisen. Diese beiden Ohren 3 werden zum Einspannen eines hier nicht dargestellten Rohres oder eines anderen, zumindest annähernd zylindrischen Körpers über ein geeignetes Spannelement in an sich bekannter Weise gegeneinander verspannt. Gemäß einer alternativen, hier nicht zeichnerisch dargestellten Ausführungsform kann der Schellenkörper 2 der Rohrschelle 1 auch ohne Ohren und statt dessen mit einem an sich bekannten Klickverschluss oder Rastverschluss ausgeführt werden.

Die Rohschelle 1 besteht hier aus Metall, insbesondere aus Federstahl oder aus einer Legierung mit Kupfer und/oder Eisen. Dabei kann die Rohrschelle 1 insbesondere auch galvanisch verzinkt ausgeführt sein. Eine besonders leichte und kostengünstige Ausführungsform einer Rohrschelle kann jedoch auch aus Kunststoff gespritzt oder gegossen sein.

Zur Aufnahme eines Gewindeelements, welches hier durch eine rechteckige Gewindeplatte 4 gebildet ist, weist der Schellenkörper 2 einen radial nach außen vorstehenden Käfig 5 auf, der einstückig aus dem Schellenkörper 2 herausgeformt ist. Im Boden 6 des Käfigs 5 ist eine Öffnung 7 für die Durchführung eines in das Innengewinde 8 der Gewindeplatte 4 einschraubbaren Gewindebolzens 9 vorgesehen.

Erfindungsgemäß weist der Käfig 5 an seiner dem Boden 6 gegenüber liegenden Oberseite zwei Haltestege 10 auf, die sich einander gegenüberliegend radial zur Längsachse 11 des einschraubbaren Gewindebolzens 9 bzw. der Öffnung 7 aufeinander zu erstrecken. Dabei ist die Länge der beiden Haltestege 10 so bemessen, dass ihre innenliegenden freien Enden 12 beim Einschrauben eines Gewindebolzens 9 in dessen Außengewinde 13 eingreifen, welches auf der Oberfläche 14 der Gewindeplatte 4 aus dessen Innengewinde 8 heraustritt. Die axialen Projektionen der freien Enden 12 der beiden Haltestege 10 liegen dabei im Bereich der Gewindeflanken des Innengewindes 8 der Gewindeplatte 4. An dem Ende, das dem in das Gewindeelement 4 einschraubbaren Außengewinde 13 gegenüberliegt, kann der Gewindebolzen ein weiteres Gewinde 18 aufweisen, über das er beispielsweise vermittels eines Dübels in eine Wand eingeschraubt werden kann.

Auf diese Weise ergibt sich durch die beiden freien Enden 12 der Haltestege 10 ein das Innengewinde 8 ergänzender zusätzlicher Gewindegang, der beim Einschrauben eines Gewindebolzens 9 mit erhöhtem Widerstand genutzt werden kann, wodurch sich nicht nur eine erhöhte Festigkeit, sondern auch die gewünschte Bremswirkung beim Eindrehen des Gewindebolzens 9 ergibt. Gleichzeitig werden durch den Eingriff der freien Enden 12 in das Außengewinde 13 des Gewindebolzens die beiden Haltestege 10 zusätzlich gegen die Oberfläche 14 der Gewindeplatte 4 angedrückt, so dass eine vergrößerte Anpressung und ein besonders sicherer, auch kraftschlüssig wirkender Halt der Gewindeplatte 4 erfolgt.

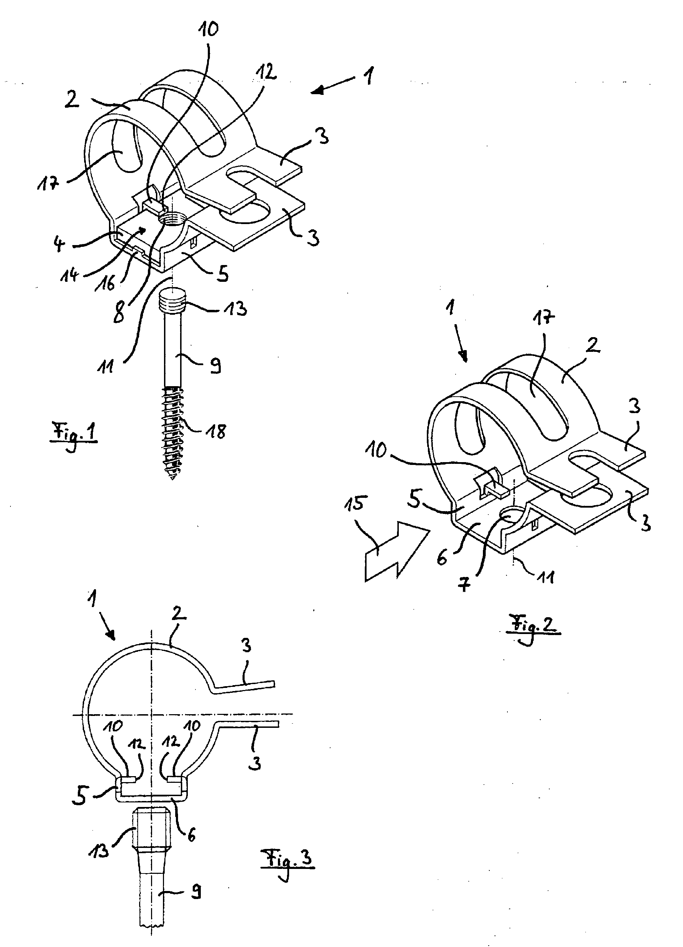

Die beiden Haltestege 10 sind so angeordnet, dass die Gewindeplatte 4 aus Richtung des Pfeils 15 parallel zur Achse des Schellenkörpers 2 leicht in den Käfig 5 eingeführt werden kann. Dabei kann die Gewindeplatte 4 bei der in Figur 2 dargestellten Ausführungsform in der Einschubrichtung 15 lediglich kraftschlüssig durch die Haltestege 10 gehalten sein oder es können gemäß der in Figur 1 dargestellten Ausführungsform auch seitliche Haltevorsprünge 16 am Boden 6 des Käfigs 5 vorgesehen sein, so dass die Gewindeplatte 4 in sämtlichen Richtungen formschlüssig im Käfig 5 der Rohrschelle 1 gehalten ist. Die beidseitig vorgesehenen Haltevorsprünge 16 sind dabei so bemessen, dass die Gewindeplatte 4 dennoch leicht in den Käfig 5 eingeführt werden kann und dort einrastet. Alternativ können die Haltevorsprünge 16 zunächst auch in der Ebene des Bodens 6 verlaufen und nach dem Einsetzen der Gewindeplatte 4 hochgebogen werden.

Die Gewindeplatte 4 kann mit verschiedenen Größen des Innengewindes 8 ausgeführt sein, wobei vorzugsweise metrische Gewindegrößen im Bereich M4 bis M10 vorgesehen sind.

Gegenüber vom Käfig 5 ist eine Öffnung 17 in Form eines sich umfangsmäßig erstreckenden Langlochs in den Schellenkörper 2 vorgesehen, durch die ein Werkzeug zum Einbringen eines Gewindebolzens 9 oder eines anderen Befestigungselementes, beispielsweise eines Nageldübels hindurch geführt werden kann. Zusätzlich kann der Schellenkörper 2 auch mit weiteren Öffnungen zur Aufnahme von elastischen Zwischenelementen vorgesehen sein, die für einen besseren Halt sowie zur Isolierung von Geräuschen einer in der Rohrschelle 1 aufzunehmenden Rohrleitung vorgesehen werden können.

## Patentansprüche

1. Rohrschelle (1) mit einem einteilig oder zweiteilig ausgeführten Schellenkörper (2), der einen zumindest im wesentlichen radial nach außen vorspringenden Käfig (5) aufweist, in dem ein Gewindeelement (4) mit einem Innengewinde (8) formschlüssig aufgenommen ist, wobei der nach außen weisende Boden (6) des Käfigs (5) eine Öffnung (7) zum Durchführen eines in das Gewindeelement (4) einschraubbaren Gewindebolzens (9) aufweist,
**dadurch gekennzeichnet,**
**dass** der Käfig (5) an seiner dem Boden (6) gegenüberliegenden Oberseite mindestens einen sich auf der nach innen weisenden Oberfläche (14) des Gewindeelements (4) erstreckenden Haltesteg (10) aufweist, durch den das Gewindeelement (4) in radialer Richtung in dem Käfig (5) gehalten ist,
wobei der Haltesteg (10) derart ausgebildet ist, dass sein freies Ende (12) in das Außengewinde (13) eines in das Gewindeelement (4) einschraubbaren Gewindebolzens (9) eingreifen kann.

2. Rohrschelle nach Anspruch 1, **dadurch gekennzeichnet, dass** die radiale Entfernung des freien Endes (12) des mindestens einen Haltesteges (10) von der Längsachse (11) des Innengewindes (8) des Gewindeelements (4) derart bemessen ist, dass das freie Ende (12) im Bereich der Gewindeflanken des Innengewindes (8) liegt.

3. Rohrschelle nach Anspruch 1 oder 2, **dadurch gekennzeichnet, dass** zumindest ein Teilbereich des freien Endes (12) des mindestens einen Haltesteges (10) bezüglich der Längsachse (11) des Innengewindes (8) des Gewindeelements (4) auf einem Radius liegt, der zwischen dem Außendurchmesser und dem Kerndurchmesser des Innengewindes (8) liegt.

4. Rohrschelle nach einem der Ansprüche 1 bis 3, **dadurch gekennzeichnet, dass** das Gewindeelement (4) kraftschlüssig zwischen dem mindestens einen Haltesteg (10) und dem Boden (6) des Käfigs (5) eingespannt ist.

5. Rohrschelle nach einem der vorherigen Ansprüche, **dadurch gekennzeichnet, dass** der Käfig (5) einstückig aus dem Schellenkörper (2) herausgeformt ist.

6. Rohrschelle nach einem der vorherigen Ansprüche, **dadurch gekennzeichnet, dass** der mindestens eine Haltesteg (10) einstückig aus dem Schellenkörper (2) herausgeformt ist.

7. Rohrschelle nach einem der vorherigen Ansprüche, **dadurch gekennzeichnet, dass** zwei Haltestege (10) ausgebildet sind, die sich bezüglich der Längsachse (11) des Innengewindes (8) des Gewindeelements (4) diametral gegenüber liegen.

8. Rohrschelle nach einem der vorherigen Ansprüche, **dadurch gekennzeichnet, dass** das Gewindeelement (4) durch eine rechteckige Gewindeplatte gebildet ist, die formschlüssig in einem rechteckigen Käfig (5) aufgenommen ist.

9. Rohrschelle nach einem der vorherigen Ansprüche, **dadurch gekennzeichnet, dass** der Schellenkörper (2) an der dem Käfig (5) diametral gegenüberliegenden Stelle eine Öffnung (17), vorzugsweise ein sich umfangsmäßig erstreckendes Langloch, aufweist.
